Europäisches Patentamt

**European Patent Office**

**Office européen des brevets**

(11) Publication number: **0 176 354**
A2

(12) **EUROPEAN PATENT APPLICATION**

(21) Application number: **85306796.5**

(22) Date of filing: **24.09.85**

(51) Int. Cl.⁴: **G 06 F 15/24**

(30) Priority: **26.09.84 US 655019**

(43) Date of publication of application:
**02.04.86 Bulletin 86/14**

(84) Designated Contracting States:
**DE FR GB IT**

(71) Applicant: **VALIDEC INC**
**853-A Industrial Road**
**San Carlos California 94070(US)**

(72) Inventor: **Thacker, Charles P.**
**543 Tennyson Avenue**
**Palo Alto California 94301(US)**

(72) Inventor: **Scholz, Frederick J.**
**3035 Dickens Court**
**Fremont California 94536(US)**

(72) Inventor: **Bryant, Robert T.**
**321 Oxford Way, No. 70**
**Belmont California 94002(US)**

(74) Representative: **Bayliss, Geoffrey Cyril et al,**
**BOULT, WADE & TENNANT 27 Furnival Street**
**London EC4A 1PQ(GB)**

(54) **Automatic ordering and accounting system.**

(57) An information entry, processing and retrieval system communicates bi-directionally over a portable hand-held terminal (21), to a radio base station (24), then over a local area network to a central computer (22). The computer also receives order-ready information from kitchen terminals, (29), controls information storage and updating functions, routes verification and other information to the hand-held terminal, (21), or the appropriate peripheral unit, and controls printing (28), of guest checks. Other applications of the system include to inventory control, and to various health care information entry, processing and retrieval systems.

FIG.—1

Croydon Printing Company Ltd

## AUTOMATED ORDERING AND
## ACCOUNTING SYSTEM

This invention relates to a computer-controlled mobile entry, information entering and retrieval system which allows personnel to key orders or other information into a hand-held terminal for relay to a radio base station (RBS) transceiver. The base station transceiver transmits the data over a local area network (LAN) to a central computer for processing and return routing to the hand-held terminal via the base station or to peripheral units such as printers on the LAN.

The system has a number of applications, one of which involves institutional ordering systems such as restaurants. In the restaurant application, food and beverage orders are keyed into hand-held terminals for transmittal via the radio base station and local area network to the central computer. Various stationary terminals in the kitchen, bar, etc., also provide information to the computer. The computer verifies the orders to the hand-held terminal or stationary terminals and routes the orders and calculated billings to selected stations along the LAN, including food preparation sites such as kitchens, bar facilities and dining room stations. In other aspects, the system affords various modes of operation which are ancillary to the ordering and billing functions, including immediate determination of stock-outs and reordering, notification of order-ready status to the hand-held terminals and

0176354

automatic calculation of individual item prices, tax and total.  The system also provides detailed data files for accounting functions, stock/inventory control and business monitoring functions.  The possibilities are as wide and varied as the capabilities of the central computer.

Conventional restaurant and institutional ordering and billing procedures are predominantly manual procedures.  As a consequence, these procedures are inherently inefficient and error prone.  Typically, the waitstaff writes customer orders on a guest check form using abbreviations or code, then carries the check to a preparation site such as a kitchen or bar.  After preparation is complete, the waiter returns to the kitchen or bar and picks up the completed order for delivery to the customer.  This sequence of order taking and delivery, order preparation, pick up and delivery is repeated for each separate ordering stage of beverage, appetizer, entree, dessert, order changes, etc.  In addition, at the end of each business day, the checks are added to provide the necessary accounting data.  This procedure is inherently time consuming and in a number of aspects, described below, is susceptible to error and/or subject to delay.

Initially, the customer order is usually written on the guest check in code or abbreviation and the abbreviated or encoded message is provided to the preparation site alone or in conjunction with a verbally communicated instruction. The oral, written and encoded aspects of the order communicating process are all subject to errors which can result in providing the wrong item to a customer.

A second opportunity for error arises in the billing procedure, i.e., in entering and calculating the individual item prices, tax and total.  Even where the bill is machine calculated in whole or in part, it is necessary for waitstaff personnel to essentially duplicate the effort of filling out the guest check by entering the individual items from the guest check into the machine register. In addition, personnel may erroneously interpret the encoded order on the guest check and, thus, produce a bill which is wrong, both as to the items ordered and the price, tax and total. In addition, many cash registers, and other point of sale machines require that the taxes and/or the total price be calculated and entered by the waitstaff. The process of looking up or calculating taxes and the total bill is time consuming and interposes another frequent source of error, both in interpreting the encoded guest check items and in performing the mathematical calculations.

Other duties may make it impossible for the waiter to immediately transfer an order to the kitchen or bar. Thus, a third undesirable aspect arises in that the orders may not be received in the order in which they are actually taken and, in fact, may not be processed in the order received at the preparation site. This causes order back-ups and delays.

In a fourth aspect, typically the conventional order-taking process only provides stock-out notification (that is, notification to the customer that a menu item is unavailable) after an order has been delivered to the kitchen or bar and the waiter so informed by the staff there. Customer reordering where there is a stock-out is thus delayed relative to the initial customer order and, along with changed or additional orders in general, is further subject to all of the above-mentioned procedural delays and errors.

A fifth prior art shortcoming involves the decreased availability of the waitstaff at customer tables as a consequence of the amount of time spent by the waitstaff in order taking and transmittal, food delivery, billing preparation and delivery, etc. In short, the duties attendant to order taking, delivery and billing decrease the amount of time the waitstaff can devote to customer service.

Finally, but not to exhaust the shortcomings, handwritten guest checks which are provided to customers reflect the codes/abbreviations used in the particular order system and the handwriting of the individual waiter. Such guest checks are, therefore, lacking in content and clarity. In addition, individual item pricing is not always provided in the guest check and it may not be possible for the customer to check the tax and pricing calculations.

Sandstedt, U.S. Patent No. 4,415,065 discloses a restaurant recording facility which eliminates some of the above shortcomings. Reference here to Sandstedt '065 is for the purpose of comparing the present invention to other ordering systems, and not as an admission that the patent is prior art. The Sandstedt restaurant system includes a portable ordering terminal which is paged by paging apparatus associated with individual customer stations. The portable ordering terminal performs a number of functions including data storage, program storage, communication and printing. In response to the page, the operator takes the portable ordering terminal to one of a number of stationary input/output stations associated wih the customer station. There, the portable ordering terminal is linked to the input/output station for communication via a polling station to a local data processor. The polling station sequentially interrogates the I/O stations looking for an ordering terminal coupling. The local data processor controls local printing of the order and is in communication with a central processor which provides centralized record keeping and control of business operations. The portable operating terminal also contains a PROM library which is modified by an order terminal programmer via the I/O stations.

While it seems clear that the Sandstedt system decreases the errors and uncertainties associated with manual procedures, it is also clear that the system itself has several disadvantages. For example, the system is complex. Also, in order to carry out its various functions, the portable ordering terminal must include various memory and logic and associated circuits and mechanical apparatus, thus providing what appears to be a relatively bulky, terminal. Furthermore, much of the system control and capability resides in the portable terminal, in the limited space which is available in such devices. In addition, the local and central processors are assigned primarily to data storage and retrieval.

It is an object of the present invention to provide a computer-controlled information entry and retrieval system which eliminates or alleviates the shortcomings of prior art manual and automated systems.

In contrast to the above-described mechanized vending system, the system of the present invention is a streamlined system comprising in one aspect a host or central computer which communicates over a communications link, which preferably is a local area network, to peripheral devices and one or more base stations. The radio base station in turn communicates by radio transmission with a number of hand-held terminals for the purpose of relaying order information to the computer. The portable hand-held terminals are completely portable, that is, there is no need to plug into a fixed station. Rather, the hand-held terminals provide mobile coverage of an area serviced by one or more radio base stations. In addition, much of the associated communications intelligence resides in the radio base station and local area network circuits. This is part of the overall design which places complete control of the system including data communications, updating, calculations, modifications and storage in the central computer and thereby takes advantage of the considerable capability of such computers, permits the use of a lightweight truly portable wide-ranging hand-held terminal, and provides a streamlined system configuration.

**0176354**

In one specific aspect, the present invention relates to an automated ordering, billing and accounting system, which comprises control means in the form of a programmed general purpose computer which is adapted for receiving order item data from a communications link and is further adapted for verifying from memory the availability of the order item and calculating billing information and providing such verification and calculations as output to the communications link; a portable terminal for transmitting order data by radio transmission and for receiving verification by radio transmission; and a radio base station adapted for (a) communicating data received in digital form from the control means to the portable terminal by radio transmission and (b) converting radio transmissions received from the portable terminal to digital form for transmission to the control means via the communications link.

In another aspect, the communications link is a local area network which is adapted for interconnecting the control means and radio base station and for interconnecting other peripheral units to the control means.

In another aspect, the automated institutional ordering system of the present invention comprises one or more terminals communicating with the control means over the local area network for providing order item data to the control means.

In still another aspect, the automated ordering and accounting system of the present invention further comprises one or more printers communicating with the control means over the local area network and controlled by the control means for printing order item data and modifications and calculations supplied by the computer.

**0176354**

In still another aspect, the portable transceiver terminal and the radio base station transceiver include receiver and transmitter means adapted for bi-directional radio communication of the digital internal system signals.

In still another aspect of the automated ordering and accounting system of the present system, the LAN further comprises a pair of wires and the control means and peripheral units further comprise driver and receiver circuits adapted for applying a high impedance interface to the LAN wires during non-transmission periods and for applying to the wire pair and receiving from the wire pair equal and oppositely directed currents such that digital 0/1 transmissions are determined by the current direction in a selected wire.

In other aspects, the versatile system of the present invention can be configured, for example, as a portable inventory entering, processing and retrieval system, and as a medical/drug data entering, processing and retrieval system for health care facilities.

As discussed more fully below, the above and other aspects of the invention eliminate or substantially alleviate the six prior art shortcomings which were described here by way of example. For example, in providing one-time entry of order information via the hand-held terminal and order verification from the central computer to the hand-held terminal, the present system eliminates the first two of the above-described prior art shortcomings. These are, first, the errors associated with the oral, written and encoded aspects of prior art order taking and, secondly, the errors associated with manual entry and/or calculation of order item pricing, tax and total. Third, the present system permits a first-in first-out system of order taking and preparation, thereby reducing backups and delays. Fourth, in response to the entry of an order at the hand-held terminal, the central computer immediately notifies the hand-held terminal of stock-out items thereby eliminating delayed stock-out notification. Fifth, in eliminating and speeding up the various tasks associated with prior art order-taking, the present system allows the waitstaff to spend a greater percentage of its time on location providing service at customer tables. Finally, but not exhaustively, in contrast to the hand-written encoded or abbreviated guest checks used in the prior art, the present system provide printed full-text, legible guest checks.

The following is a description of a specific embodiment of the present invention being made to the accompanying drawings, in which:

FIG. 1 is a block diagram which provides an overview of a preferred embodiment of a restaurant application of the computer-controlled information entry and retrieval system of the present invention;

FIG. 2 is a block diagram which illustrates the control board communications interface between the central computer and the local area network and between each peripheral unit and the local area network;

FIG. 3 is a block diagram of the local area network control board used in the host computer;

FIG. 4 is a block diagram of the universal local area network remote station control board which is used in the various peripheral units;

FIG. 5 is a schematic diagram of the driver circuit which is used in the local area network control boards of the host computer and the peripheral units;

FIG. 6 is a schematic diagram of the receiver circuits which are used in the local area network control boards of the host computer and the peripheral units;

FIG. 7 is a simplified block diagram schematically illustrating the equal and oppositely-directed current relationships in the local area network between the line driver and receiver circuit which suppress electromagnetic interference;

FIGS. 8 and 9 illustrate the LAN voltage relationships which establish communications without electromagnetic interference;

FIG. 10 is a block diagram of the radio base station;

FIG. 11 is a block diagram of the hand-held terminal;

FIGS. 12 and 13 are circuit diagrams of the transmitter circuit which are common to the radio base station and the hand-held terminal;

FIG. 14 is a circuit diagram of the receiver which is common to the radio base station and the hand-held terminal;

FIGS. 15-18 are flow charts illustrating the communications aspects of the operation of the system of FIG. 1 and, in particular, the major computer routines applicable to such system operation; and

FIGS. 19 and 20 illustrate alternative embodiments of the information entry, processing and retrieval system of the present invention.

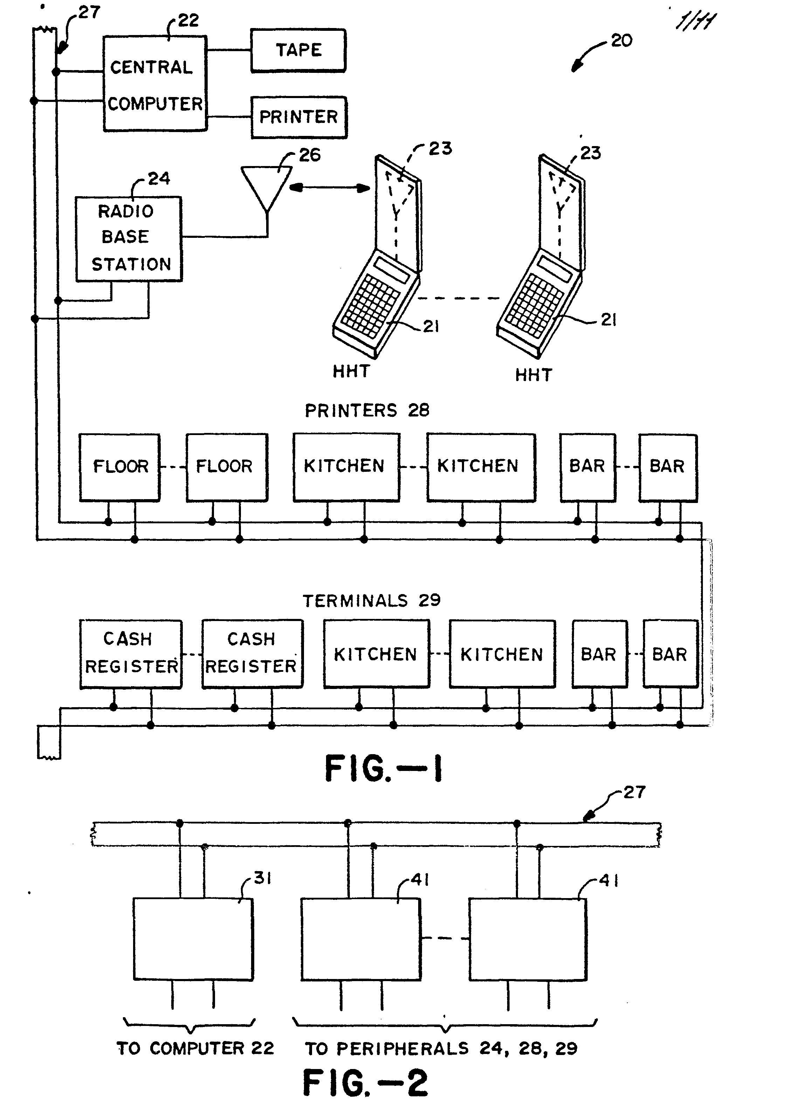

FIG. 1 is an overview of the present, automated system in an embodiment 20 which is adapted for restaurant application. The waitstaff carries wireless remote hand-held terminals 21-21 for the purpose of bi-directional communication of customer orders, verification, etc. with the central computer 22. Each hand-held terminal 21 includes an alphanumeric keyboard for entering orders and the like and an LCD screen which displays verification and other communications from the central computer 22. The hand-held terminals 21-21 allow the waitstaff to transmit orders to various preparation locations such as a kitchen or lounge via the central computer and to receive immediate notice of stock-outs and to immediately reorder, all without leaving the restaurant floor and the customer. The hand-held terminals 21-21 communicate bi-directionally via individual antennas 23 to one or more radio base stations 24 via the base station antenna 26. The base station in turn communicates with central computer 22 via the communications link, a unique local area network system 27. The radio base station 24, like the hand-held terminal 21, includes both a receiver and a transmitter. The base station antenna 26 is located in the vicinity of the hand-held terminals -- typically in the restaurant dining area or in the ceiling -- for accepting input from the remote hand-held terminals and relaying the input data to the host computer 22. In return, the base station accepts input from the host computer for retransmission to the appropriate hand-held terminal.

The functions of the system 20 include allowing the waitstaff to place orders directly from a customer location to various preparation sites such as the main kitchen or salad bar or lounge. This system eliminates delayed stock-outs by providing immediate notification of stock-outs from data stored in the host computer files, and reordering thereof. In addition, the system feedback ensures that the menu choices are available. In general, the system permits instant implementation of cancellations and changes as well as add-ons to a previous order. For example, where beverages or menu items are ordered sequentially, as courses, the waitstaff is able to instantaneously communicate the additional items to the various food and beverage preparation sites. Finally, but not exhaustively, guest checks at a selected table or location may be provided individually or in essentially any combination of separate and combined checks.

## Host Computer

The host or central computer 22 typically is a small general purpose computer. In a working embodiment, an IBM PC XT is used. The host computer 22 performs a multiplicity of routing, informative and accounting functions, including accepting input from the radio base station 24 for routing via the local area network 27 to the appropriate peripheral station such as, for example, a kitchen or bar printer 28 or terminal 29. In addition, the host computer 22 automatically responds to orders from the hand-held terminals 21-21 to verify the order and provide notification if options are available (such as the available beverage sizes and available salad dressing choices), then receives the option order from the hand-held terminal for transmission to the appropriate peripheral station. The host computer 22 also accepts input from the kitchen, bar and other terminals (for example, out-of-stock notification and order-ready notification for a particular table), and calculates the cost of the guest check, adds tax and directs the check printing at the appropriate printer location 28, typically the restaurant floor or in the bar. In addition, the computer maintains extensive files and is available after hours for accounting, stock, inventory control and other monitoring functions.

As alluded to above, various printers 28 and terminals 29 perform a number of functions under control of the host computer 22. For example, under control of the host computer 22, the restaurant floor and bar printers 28 print itemized guest checks which include identification of the ordered items by name and price, any tax calculations and the total. Similarly, the kitchen printer 28 prints complete, itemized orders from the dining room in a first received, first printed sequence. The hand-held terminals 21 and the terminals 29 located, for example, in the kitchen or bar or at the cash register permit communication among the waitstaff via the central computer and may be used to forward guest checks from one location to another, such as from the bar to the dining room.

The present invention 20 is designed so that all communications are routed through the central computer 22. System operation is controlled by the computer 22, and by its software, which is readily implemented and modified. Those familiar with such computers will readily appreciate that various functions described herein as well as numerous others are available in the art or readily implemented. Considerable flexibility and capability are available in the system 20 simply by taking advantage of the inherent capability of available small general purpose computers such as the IBM PC XT. For example, it is possible to update or modify the functional capability of the system simply by modifying the host computer software, without changing any hardware or software in the peripheral units, radio base station 24 or hand-held terminal 21.

Additionally, this versatility frees the intelligence of the other units such as the hand-held terminal and the radio base station for use in communications. The hand-held terminals and radio base station microcomputers or microprocessors can thus be dedicated to providing valid communications with the central computer.

The use of the host computer 20 also provides unique communication capabilities between that computer and the printers 28 and terminals 29, even where these peripheral units comprise standard commercially-available equipment. In general, the purpose of a terminal such as 29 is to communicate with the computer 22 via a display and a keyboard. In the present system, three of the primary functions of the bar or kitchen (or other) terminals 29-29 are to enter into the computer 22 via their respective keyboards (1) stock-out information for a particular menu item; (2) notification that an order is ready for a particular table or other location anywhere in the system; and (3) notification that a customer, identified by guest check, is transferring from one location to another such as from the lounge or a particular table in the lounge to a particular restaurant table. The computer 22 responsively changes its internal address to reflect the new customer location; provides notification to the appropriate hand-held terminal 21 that the order is ready; or in the case of a stock-out, stores that information for immediate notification when the item is thereafter ordered. Furthermore, at peripheral (remote) stations such as the bar and kitchen, it is frequently desirable to provide a printer 28 at or near or in combination with the terminal 29. At remote stations which also function as order entry locations (such as the bar), the terminal can be provided with the keyboard of the HHT 21 for order entry, in addition to keys for, e.g., the above three functions, and an associated printer.

As mentioned, the centralized computer control permits the use of the terminal display for verification. That is, the host computer 22 effects a display of the information it has received from a stationary terminal 29 (or hand-held terminal 21) thus providing verification to the sender that the correct information regarding the particular stock-out, or the change or addition in menu item or options, has been correctly received by the computer.

Also, the optional use of cash registers and cash drawers in readily implemented. Some establishments prefer that the waiters collect cash. In the present system, the information which is available to the hand-held terminals 21-21 via the computer 22 permits the hand-held terminals to perform all the functions that cash registers normally do. At the end of a customer transaction, the waiter requests the bill via a keystroke entry on the hand-held terminal 21 and the computer 22 responsively routes the account to the appropriate location, controls the printing of the guest check there, stores the account data in archival memory and closes out the account. However, if desired, cash register terminals are readily implemented in the restaurant floor or elsewhere. The cashier can enter various information at the terminals such as whether the bill was paid by credit card or by cash, the amount of tip and various types of information that are necessary for accounting or are useful in monitoring and control functions.

0176354

In short, the system 20 and the use of the central computer 22 provide for the entry of data into the computer with a minimum of work and provide considerable flexibility and accuracy in the use of that data both during the working day of the restaurant and afterwards in performing accounting and inventory control and other functions.

## Local Area Network

Referring to FIG. 2, the communications link between the various units of system 20 can be provided by an individual cable connection between each peripheral unit 24,28,29 and the host computer 22. For any but the very smallest systems, the number of cables and their resulting bulk dictate the use of a multiplexed communications link such as a local area network. Such systems conventionally include a cable such as a shielded twisted wire pair, and line driver circuits and receiver circuits which control communications over the cable to the system computer(s) and peripheral units on a time division multiplexing basis. While various local area networks and their associated driver and receiver circuits are available, the local area network 27 disclosed herein is preferred for the relatively small computer link-up of the present institutional system. The LAN 27 satisfies the three requirements for such systems: namely, it provides bi-directional communication between the computer and the peripherals (including the radio base station); it provides a low cost, convenient installation; and its operation is uniquely designed to suppress or eliminate radiation, particularly EMI (electromagnetic interference).

In terms of the LAN communications function, and as described above, the present system 20 is designed to receive data one character at a time from a hand-held terminal 21, transmit the data over the local area network 27 to the central computer 22 for processing and then transmit the processed data back to the hand-held terminal for verification display and update display, and if appropriate to a terminal or printer elsewhere in the system. Communication over the local area network 27, which operates at 60 kilobaud, is controlled by LAN control boards which conveniently plug into sockets inside the central computer 22 and at the peripheral units 24, 28 and 29.

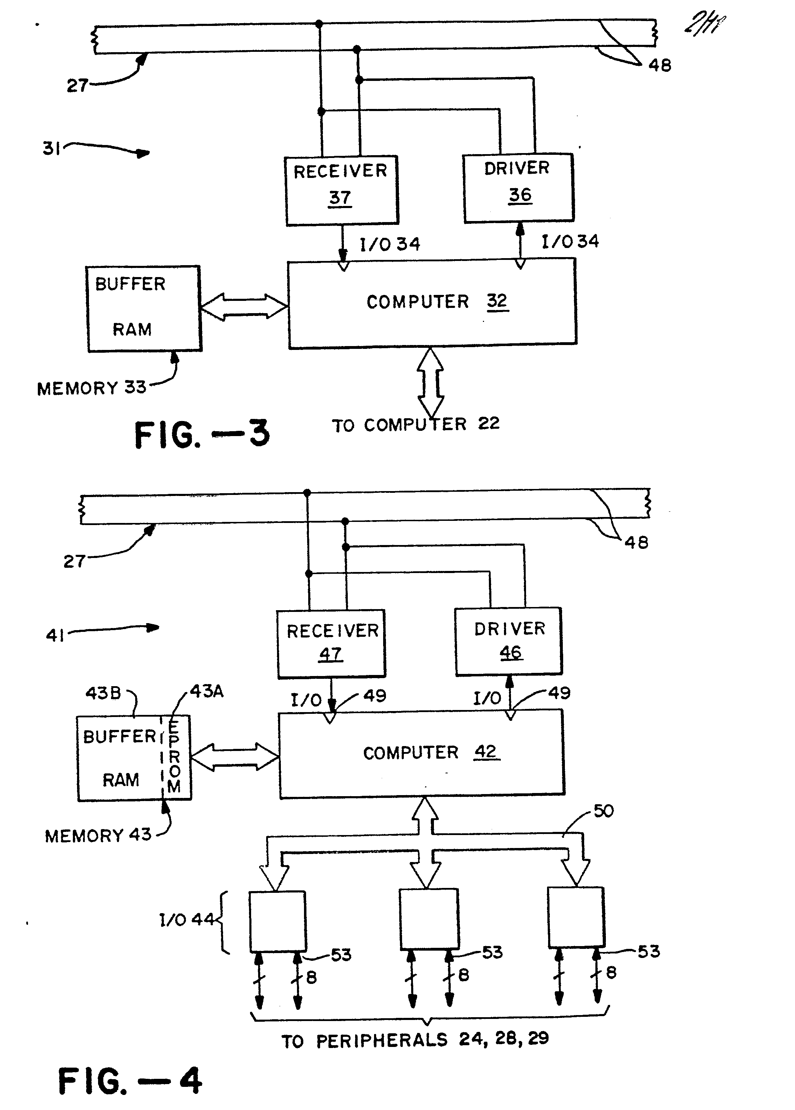

FIG. 3 is a block diagram of the local area network control board 31 for the host computer. That host computer control board (HCB) includes a computer comprising a microprocessor 32 with memory 33 and I/O 34 to a line driver circuit 36 and a receiver circuit 37 which drive current over the LAN cable. The processor 32 presently used is an NMOS 6803, which uses Schottky $T^2L$ logic. The operating program is loaded into the RAM memory. Software executed by the host computer 22 controls the data flow in the system.

Referring to FIG. 4, each peripheral unit 24,28,29 has a local area network remote station board (LRSB) 41 which is similar to the host computer control board 31. Each LRSB 41 contains a computer comprising a microprocessor 42 with memory 43, external EPROM memory 43A and I/O 44 to one or more of a keyboard, a printer controller and a display. The peripheral processor 42 presently used is a CMOS 6303, which uses the same instruction set as the 6803. Each peripheral unit is programmed in 6303 assembly language; the operating program is stored in the ancillary, EPROM memory 43A. There is sufficient capacity in the random access memory to manipulate data and store messages in buffers. The remote boards also contain receiver and driver circuits 46 and 47 which are identical to their counterparts in the host computer board 31.

Because of its similarity to the remote station boards 41, the overall operation of the host computer board 31 can be understood from the following description of the remote boards. Referring still further to FIG. 4, the remote LAN boards 41 receive data from the central computer 22 which is transmitted over the local area network as current, and store that data in the RAM buffer memory 43B until the peripheral unit (radio base station 24, printer 28 or receiver 29) is ready to use it. In addition, the remote LAN boards receive information from the peripheral units 24,28,29, store it in the RMA buffer memory until the host computer 22 and the LAN 27 are available for transmission, then transfer the information over the LAN to the host computer.

In a present working embodiment, the remote LAN boards 41 comprise in addition to the 6303 CMOS microcomputer and its RAM memory and the separate EPROM program memory, additional RAM buffer storage in the form of four CMOS 6116 RAM memories. The 6303 processor 42 includes a serial I/O port 49-49 which is connected to the driver 46 and receiver circuits 47. Data and address buses 50 are connected to I/O 44 in the form of three 63C21 peripheral interface adapters (PIA) 51-51. Each PIA contains two bi-directional eight bit data ports 53-53 which provide universal connection to the interface devices 24,28,29. The three PIAs are used on each remote LAN board 41 to provide sufficient capacity to permit a single board design to be used interchangeably for all peripheral units.

Referring further to FIG. 4, the ports 53-53 of the 52 devices 51 function under program control as input or output ports. That is, in one peripheral unit the particular port 53 can be used as an output port for providing data to a printer 28. In another application, such as in a terminal 29, the particular port may function as an output port for providing data to a display, or as an input for receiving data from a keyboard. Similarly, in the radio base station 24, a particular port may function as an output for providing data to the base station transmitter, or as an input for transmitting to the computer 22 data received by the radio base station from a hand-held terminal 21. In short, the remote LAN boards 41 receive data in serial form from the host computer via the LAN cable 48 (or in parallel from a peripheral unit), process the data based upon the instructions contained in the data, and pass the data in parallel form to a peripheral device (or serially over the LAN network to the host computer 22).

The circuit schematic for the driver circuit 46 is shown in FIG. 5. Referring to FIG. 5, and as described in greater detail below, the bi-directional I/O data transmission in the LAN cable is effected by the current direction in a selected one of the LAN wires, designated Line 1 and Line 2. At the same time, an equal magnitude, oppositely-directed current is generated in the second wire of the pair to minimize radiation. The equal-valued opposite currents are generated by the line driver circuit 46 used in both the computer and remote LAN boards.

0176354

Essentially, the driver circuit 46 receives data in the form of voltage pulses from the serial output port 49 of the microcomputer 42 of FIG. 4 and converts the voltage pulses to current pulses to drive the LAN cable. During the normal quiescent state when the driver circuit is not communicating to the local area network, the line driver transistors Q1, Q8 and Q2, Q9 are biased off to present a high impedance to the local area network. Thus, when there is no traffic on the LAN, there is no current in it. To communicate over the LAN, the line driver transistor pairs are selectively turned on to put the appropriately-directed current on the line.

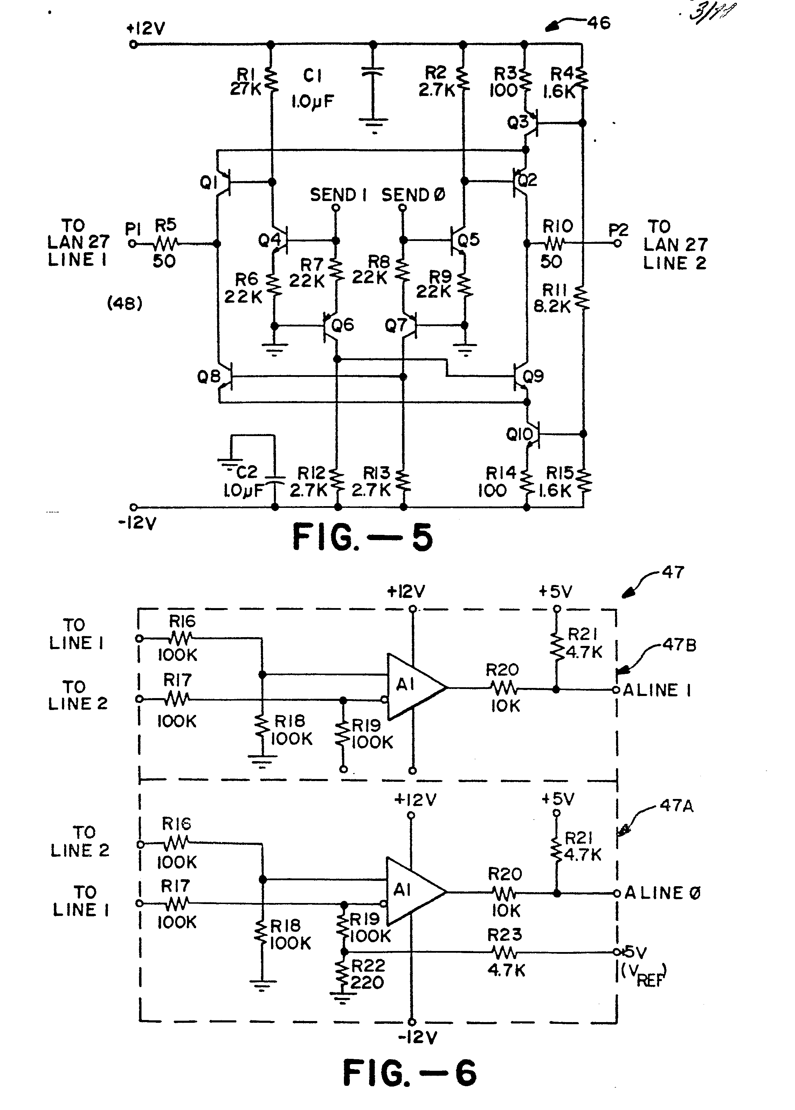

Conversely, the receiver circuit 47 converts LAN current pulses to voltage pulses for application to the serial input port 49 of the microcomputer 42. The circuit schematic for the receiver 46 is shown in FIG. 6 and described in greater detail subsequently. The software program of the LRSB microcomputer 42 enables the computer to detect data addressed to the particular board over the LAN. The data is processed by the program contained in the computer EPROM memory 43A in accordance with the requirements of the associated peripheral units.

The line driver circuit 46 of FIG. 5 is used in both the host computer control board 31 and the remote station control boards 41 to effect the bi-directional I/O data transmission in the LAN cable. The connection between circuit 46 and the actual twisted pair transmission lines 48-48 is by way of circuit connector pins P1 and P2. The transmission of digital 0/1 information over the transmission lines 48-48 is controlled by the +2.5V Send 0/ Send 1 signals from the HCB computer 32 of FIG. 3 or the LRSB computer 42 of FIG. 4. The basic function of the transmitting circuit 46 is two-fold: to decouple the transmitter from the lines when no signal is being transmitted, and to generate equal magnitude,

0176354

oppositely-directed currents in the twisted pair transmission line to transmit logic 0/1 without the radiation of electromagnetic interference. Thus, when power is off in the HCB or LRSB units, the Send 1 and Send 0 lines are both low so that the HCB and the LRSB are completely decoupled from the line to avoid interference with other units that are communicating. When information is to be transmitted, line Send 0 or Send 1 is taken high to generate the associated balanced currents.

Regarding components, the transmission circuit 46 comprises line driver transistors Q1, Q2, Q8 and Q9, control transistors Q4, Q5, Q6 and Q7, transistors Q3 and Q10 which function as current generators, and the associated illustrated resistors R1-R15 and capacitors C1 and C2. When a particular driver circuit 46 is quiescent, that is, when both the Send 0 and Send 1 lines are low, no current is transmitted by the circuit over the lines 48-48 (Line 1 associated with P1 and Line 2 associated with P2). The associated HCB 32 or LRSB 42 is completely decoupled from the line to avoid interference with other units that are on the twisted pair transmission line and to avoid generation of electromagnetic interference. That is, when both of input signals Send 0 and Send 1 are low, then both transistors Q4 and Q5 are held off so that Q6 and Q7 are also off. As a result, the line driver transistors Q1 and Q9, Q2 and Q8 are all off and the circuit 46 is isolated/decoupled from the local area network 27.

To send logic 1 signal over the LAN 27, a Send 1 signal of approximately 2.5 volts is applied by the associated microcomputer 32 or 42 to turn on Q4 and, responsively, Q6. Q4 in turn turns on Q1 and establishes a current from Q3 through Q1 into line 1. Also, Q6 turns on Q9 and establishes current flow out of line 2 through Q9 and back through Q10. The current flow out of the upper current generator Q3 through Q1 into line 1 and then out of line 2 through Q9 and back through Q10, pulls the pin 1 side of the line positive and the pin 2 side negative.

To send a logic 0 signal over the LAN 27, the application of a Send 0 signal of +2.5 volts to Q5 turns on Q5 and in turn Q7. Q5 also turns on Q2 and establishes current through Q3 and Q2 into line 2. Q7 turns on Q8 and establishes current out of line 1 through Q8 and back through Q10. The current flow out of line 1 and into line 2 pulls line 2 positive and line 1 negative.

As described, the driver circuit 46 is balanced in that Q4 is turned on in response to a Send 1 signal and current flows into line 1 and out of line 2 to pull the pin one side positive and the pin two side negative, and Q5 is turned on in response to a Send 0 signal so that current flows into line 2 and out of line 1, thereby pulling the pin 2 side positive and the pin 1 side negative. The circuit is essentially a bridge circuit in which in one mode of operation (Send 1) Q1 and Q9 provide equal magnitude, oppositely-directed currents in the twisted pair, whereas in the other mode (Send 0) Q2 and Q8 provide equal-valued opposite currents which are individually opposite to and provide the logic complement to the first set. As the result, regardless of whether the circuit 46 is in the quiescent, the Send 1 or the Send 0 state, the average DC current in the twisted pair transmission line is always zero. The result will be that the line will not radiate energy and so provides very low EMI. The operation of the circuit 46 in applying equal valued opposite currents over the local area network 27 to the receiver circuit 47 is illustrated schematically in FIG. 7.

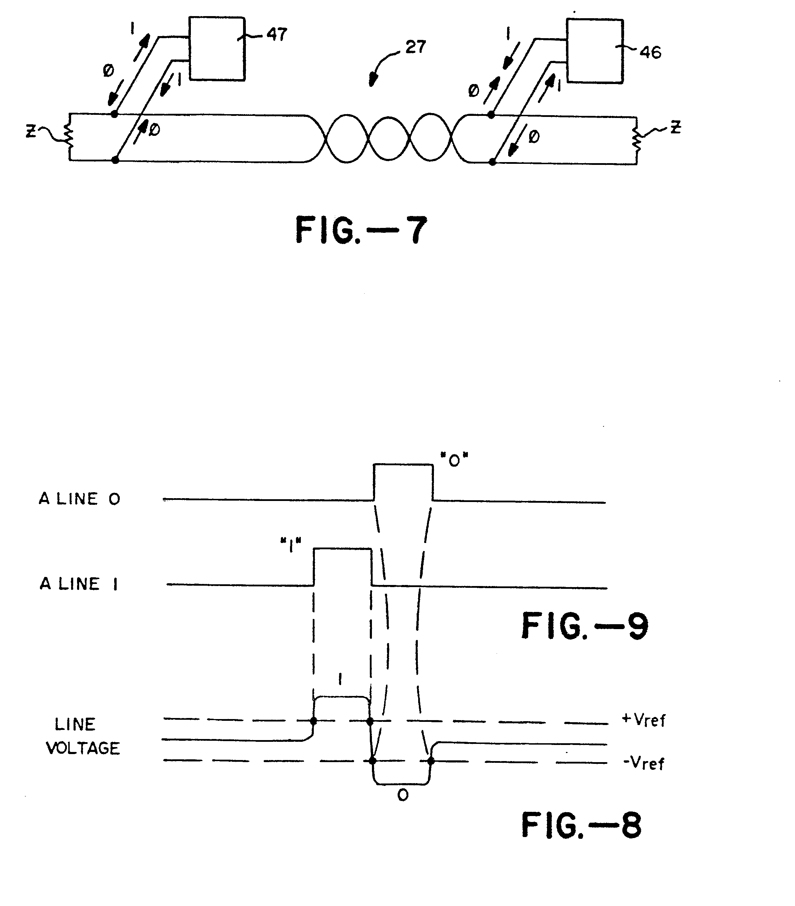

The receiver circuit 47 is shown schematically in FIG. 6. The operation thereof is described in conjunction with that figure as well as FIG. 7 and the voltage diagrams shown in FIGS. 8 and 9. As shown in FIG. 7, both ends of the twisted pair transmission line terminate in the characteristic impedance, Z, of the line itself which is about 120 ohms so that there are no reflections. This allows any number of devices to communicate providing that two of them do not transmit at once. The receiver circuits 47 are designed to detect when the twisted pair transmission line is at logic 1 or logic 0. The circuit 47 is designed around two LM339 amplifiers, designated Al and the associated illustrated resistors R16-R23. The amplifiers are connected respectively via output lines A lines 0 and A line 1 to the respective HCB or LRSB microcomputer 32 (FIG. 3) or 42 (FIG. 4) to provide the input signals shown in FIG. 9 which represent logic 0 in the case of A line 0 and logic 1 in the case of A line 1. Basically, the amplifiers Al use the input from the twisted wire pair 48-48 and establish a reference voltage magnitude below which neither signal is asserted and above which either a one or a zero is asserted. The amplifiers Al are connected in circuit with the associated resistors R16-R23 as shown in FIG. 6 to receive as input the voltages associated with Line 1 and Line 2 generated by the driver circuit 46, and a +5 volt reference voltage. Referring to FIG. 8, the differential amplifiers Al of the similar receiver circuits 47A and 47B compare the line voltage of Line 1 and Line 2 to a reference voltage (+Vref and -Vref, respectively) and generate the corresponding logic 1 or 0 signal on A line 1 or A line 0 when the magnitude of the line voltage exceeds the reference voltage. Note, the approach eliminates false 1/0 signals in the event of line noise. The critical thing is that when there is no transmission, A line 1 and A line 0 indicate off, whereas during transmission the appropriate logic 0/1 is indicated.

It should be noted that in one preferred working embodiment, signal A line 1 and the associated circuit 47B containing amplifier Al are not used. The reason is that the embodiment of dual circuits 47A,47B uses a more complicated arbitration scheme than is necessary. In this scheme, the central computer 22 transmits a short message and the peripheral units responsively transmit to determine which participant is the highest priority requestor. In contrast, in the presently preferred approach (which does not use the amplifier circuit 47B), central computer 22 polls each of the peripheral units in turn and each unit is responsible for replying.

Since the conventional computer polling approach allows only one station at a time to transmit, the second amplifier circuit 47B is not needed.

## Peripheral Units (Printers; Terminals; Cash Registers)

Referring again to the overall system organization shown in FIG. 1, in one working embodiment the printer station 28 used in the present system comprises the above-described local area network remote station board 41 and a printer such as a Fujitsu FTP-040UC with controller board FTP-040DC and message tear-off sensor. At the printer station, the local area network remote station board software is configured to allow the printer to print messages sent from the host computer 22 over the local area network. When the prior message is removed from the printer by tearing the paper, the tear-off sensor applies a "ready-to-print" signal to the LAN remote station board 41 (FIG. 4). If there is a message in the 6116 RAM buffer storage 43B of the board 41, the message is printed. Other messages are stored in the central computer 22 buffer and are sent on a first in first out (FIFO) basis. The LRSB 41 is polled periodically by the host computer 22 and when there is room in the buffer memory to store a message, the microcomputer 42 of the LAN remote station board sends an identification and space available message to the host computer 22. The host computer scans its files and if data is present it is sent to the printer station for storage in the LAN remote station board buffer memory 43B for printing.

The kitchen terminal or cash register terminal and bar terminals are essentially identical except for their keyboard nomenclature. Each comprises a LAN remote station board 41, a display and a keyboard grid. In one present working embodiment, the display is an IEE, one line by 40 characters, vacuum fluorescent display and the keyboard is an Oak Switch keyboard grid. Messages entered into the terminal keyboard are stored in the buffer memory in the LAN remote station board 41 and transmitted over the local area network to the host computer 22 in response to polling by the computer. Similarly, messages to be displayed in the terminal are transmitted by the host computer 22 over the local area network to the LSRB buffer storage 43B for transfer to the terminal.

Radio Base Station

Referring to FIG. 10, the radio base station comprises a local area network remote station circuit board 41 which communicates to a radio base station circuit 55 over a pair of eight-bit parallel I/O data ports 56-56 via a 26 conductor flat cable 57. The separate ports are dedicated to handling unidirectional data flow.

The radio base station circuit 55 comprises a digital section in the form of a microcomputer 58 and a radio transceiver section 59. The radio base station computer 58 is designed to handle communications with the radio section 59, whereas the LAN remote station board microcomputer 42 handles communications with the local area network 27. The two computers communicate via the I/O ports 56-56. In a working embodiment, the radio base station microcomputer 58 comprises the 6303 CMOS device, which includes on-chip RAM memory. As in the other

0176354

peripheral stations, the LAN remote station circuit 41 buffers messages to both the host computer 22 and the radio base station board 55. The four 6116 RAM buffer storage chips in the LRSB 41 computer 42 are capable of buffering messages for up to fifty hand-held terminals 21. The LRSB microcomputer 42 transmits messages to the radio base station microcomputer 58 as fast as the base station transceiver 59 can transmit them. The radio base station microcomputer 58 accepts one message, transmits it, then signals the LRSB 41 that it is ready to receive another.

The purpose of the radio base station computer 58 is to control the radio transceiver 59, including modulator 65, transmitter 66, receiver 60 and demodulator 61. The computer 58 receives data transmitted in parallel over the LAN remote station board 41 and transmits it serially over the radio. The radio includes a modulator circuit 65 which converts the digital voltage output pulses from the microcomputer 58 into ramped signals and then passes the signals to the transmitter 66. The transmitter is crystal-controlled and transmits approximately 100 milliwatts of power, frequency modulated, using a varactor diode as a reactant modulator. The microcomputer 58 is fully occupied during transmission in controlling the transceiver 59 and in serializing the data. When transmission is complete, the microcomputer switches into the receiving mode in which its processor is fully occupied looking for an incoming data packet from the radio receiver 60 for transmittal to the LAN remote station board 41. Receiver 60 is a dual-conversion receiver with one microvolt sensitivity and three kilohertz selectivity designed around the Motorola MC3357. Demodulator 61 converts the incoming sinusoidal signals to the digital voltage levels required of the microcomputer 58.

The microcomputer 58 can also perform a number of other functions. Upon receiving a message from the radio transceiver 59, it verifies if the message is valid by checking the identification of the sending hand-held terminal 21. The computer 58 also examines the check sums and determines if the message was accurately received. If so, the message is transmitted to the LAN remote station board buffer memory, then when the LRSB is polled by the host computer 22, is transferred to the host computer.

The host computer puts a message in the appropriate storage file, and then sends an acknowledgment and the complete stream of characters associated with the current item in the file over the local area network to the radio base station LRSB 41 buffer storage, which passes the message to the radio base station circuit 55. This message contains the identification of the originating hand-held terminal 21 so that only that terminal receives and displays the message.

The radio transceiver section 59 is essentially identical to that used in the hand-held terminals 21, which is discussed in additional detail in the following section.

Hand-Held Terminal

The hand-held terminal 21 is a battery powered portable unit which in its current embodiment is designed to weigh approximately one pound in a one-inch thick by four-inch wide by seven-inch long configuration. Referring to FIG. 11, the terminal 21 includes the communications circuit 55 comprising the microcomputer 58, and the radio circuit board 59, an alphanumeric keyboard 63 and a liquid crystal display 64 which is backlighted by an electroluminescent panel.

The backlighting panel is described in co-pending application U.S. Serial No. 655,020 , entitled KEYBOARD SCANNING APPARATUS AND METHOD, filed in the name of CHARLES P. THACKER, on the same date as the present invention. The THACKER application is assigned to the assignee of the present application and is incorporated by reference.

As mentioned regarding the radio base station, the radio includes a modulator circuit 65 which converts the digital voltage output pulses from the microcomputer 58 into ramped signals and then passes the signals to the transmitter 66. The transmitter is crystal-controlled and transmits approximately 100 milliwatts of power, frequency modulated, using a varactor diode as a reactant modulator. Receiver 60 is a standard dual-conversion receiver with one microvolt sensitivity and seven and one-half kilohertz selectivity designed around the Motorola MC3357. Demodulator 61 converts the incoming sinusoidal signals to the digital voltage levels required of the microcomputer 58.

The antenna 23 is a coil-configuration compressed quarter wave vertical antenna designed to fit on a three-inch by six-inch printed circuit card.  The antenna is the subject of co-pending U.S. patent application, Serial No. 655,046    , entitled MINIATURE RADIO TRANSCEIVER ANTENNA, filed in the name of FREDERICK J. SCHOLZ, on the same date as the present application.  The SCHOLZ application is assigned to the assignee of the present application, and is incorporated herein by reference.

In operation, when a keystroke entry is made on the hand-held terminal keyboard 63, the terminal identification and the ASCII code for that key are transmitted by the transceiver section 59 via antenna 23 using MFM techniques.  After receipt by the radio base station 24 and processing by the host computer 22, an acknowledgment message is transmitted by the host computer 22 over the radio base station transmitter via antenna 26 to the microcomputer 58 of the hand-held terminal for verification display.

The modulation/demodulation scheme employed in the radio base station and hand-held terminal radio transceivers 59 is designed to transmit data at a fast rate by radio transmission and maintain a minimum bandwidth in compliance with FCC regulations.  In systems which use square wave frequency modulation, a very large number of side order products and intermodulation products are generated which take up a large amount of the frequency spectrum.  The present system, however, is limited to a frequency bandwidth of $\pm$ 10 kHz (kilohertz) about the selected carrier frequency, 27 MHz (megahertz), the center frequency of the signal transmitted by the radio base station and hand-held terminal antennae.

A minimum number of side bands and the minimum bandwidth is generated when the modulation frequency is sinusoidal rather than square wave, so the modulator 65 of the radio base station and hand-held terminal is designed to develop a modulation signal which approximates a sinusoidal signal and which nonetheless permits the detection of bit information at the demodulation point and the transitions from high to low with accuracy. The modulation signal which satisfies these requirements is a ramped signal, one that is ramped both up and down. When the minimum bit time occurs in transmission, the signal is of a sawtooth pattern. For the maximum bit time, which is about four times the minimum bit time, the ramp up and ramp down times are the same as in the minimum bit time and the signal is trapezoidal. This signal permits transmission with the minimum bandwidth, within 20 kHz of the carrier frequency, permits a reasonable baud rate, 4400 baud, and transmits data with accuracy.

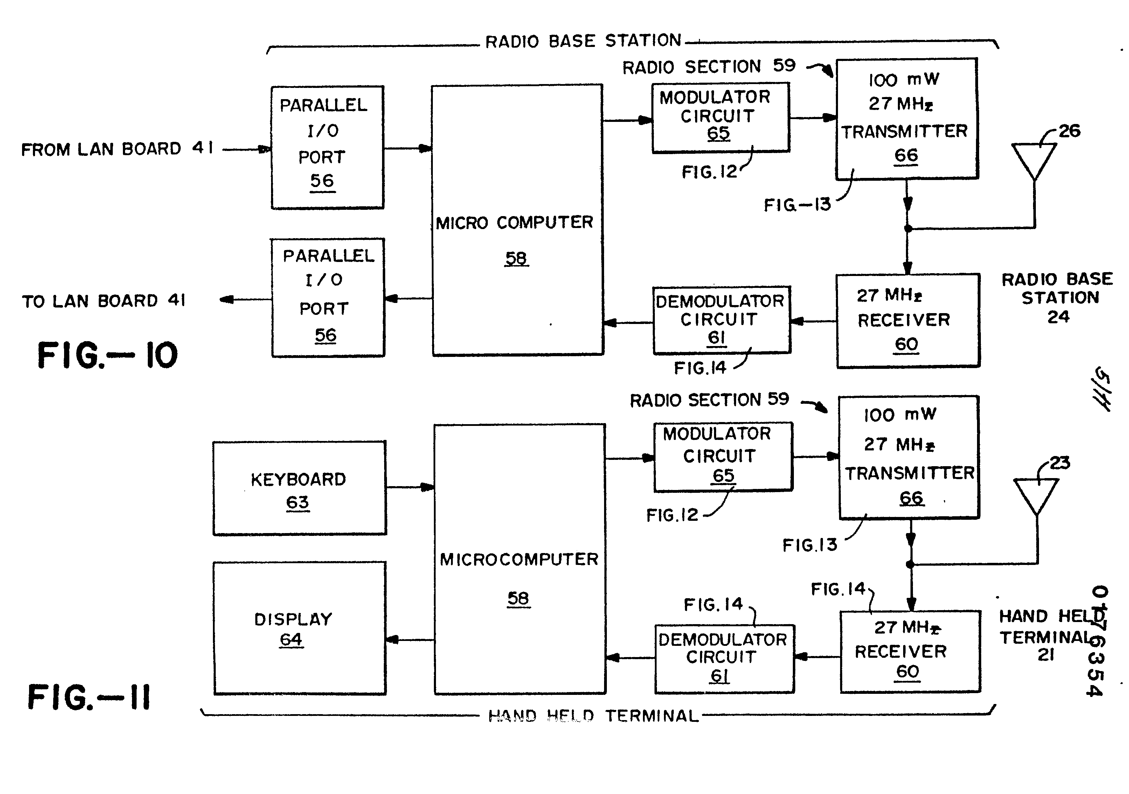

Referring to the circuit schematic in FIG. 12, the modulator or shaper circuit 65 comprises a differential amplifier A3 having the Audio X input signal from the radio base station or hand-held terminal computer 58 fed through resistor R25 to its inverting input, a potentiometer R24 connected to its non-inverting input, a feedback capacitor C1 connected between the output and non-inverting input terminals, and a capacitor C2 and varactor CR1 connected in parallel between the output terminal and system ground. The feedback capacitor C1 delays the Audio X input signal and, therefore, provides the ramp up and ramp down pattern. The values of the capacitors C4 and C5 are selected based upon the amount of side bands in the transmitted signal in order to provide the necessary slope in the ramped output signal Audio In. The potentiometer R24 also contributes to shaping the modulating signal at A3 in that it feeds into the non-inverting input of A3 and, thus, determines the time of the ramp up and ramp down. R24 provides a variable ratio of ramp up to ramp down so that in the detection of the AUD OUT signal, the desired square wave output AUDIO R is provided by the receiver 60 and demodulator 61 circuits to the computer 58, even though the receiver tracking characteristics might be different in ramping up and ramping down. Also, varactor CR1 is a 4.7 volt zener diode which clamps the output signal Audio In to less than 5 volts, the supply voltage for the 6303 computers 58, and, therefore, prevents any overshoot in the ramping up of the signal and keeps the bit times precise. The Audio In output of amplifier A3 is fed into the frequency modulated oscillator section 71 of the transmitter 66, FIG. 13, using CR2, a varactor diode, as the modulator.

In a working embodiment of the modulator/shaper circuit 65 designed to interface with the 6303 computers 58, potentiometer R24 is a one hundred - one thousand ohm potentiometer, R25 is 10,000 ohms, R26 is 2200 ohms, amplifier A3 is an LM393 integrated circuit differential amplifier, C4 and C5 are rated at .0047 microfarads and zener diode CR1 is rated at 4.7 volts.

Referring to the circuit schematic shown in FIG. 13, the oscillator and transmitter circuit 66 as well as the oscillated modulator itself are standard state-of-the-art circuits whose operation is described herein for completeness of understanding. In the transmitter oscillator 71, the varactor diode CR2 is connected in series with crystal Y1 which sets the frequency of operation. CR2 exhibits some capacitance and as the Audio In signal changes its DC level from zero to 4.7 volts maximum, the varactor diode exhibits a change in capacitance and the change of this reactance in series with crystal Y1 causes Y1 to shift frequency and, thus, provides the frequency modulation. Crystal Y1 is selected at one-third the actual operating frequency, and the reactance-modulated frequency is applied to the primary of TX1 and tripled in the next stage 72.

Tripler stage or section 72 consists essentially of two push-pull connected transistors/amplifiers Q14 and Q16 which have their bases connected to the secondary windings of TX1 and their collectors connected in parallel across variable capacitor C11 to the primary of TX2. This arrangement triples the deviation of the modulation from the frequency modulated oscillator section 71. This approach allows the circuit to pull a crystal frequency on the order of less than one kHz which is then tripled and provides a deviation on the order of two kHz. Two kHz is a desired deviation given the FCC requirement that the total bandwidth including all side order products be less than 20 kHz, as swinging two kHz each side of the center frequency allows the circuit to maintain the primary modulation signal within 20 percent of the total allowed bandwidth. Therefore, the additional 80 percent of bandwidth is available for the side order products which will be generated in any modulation scheme. This tripled signal which is tripled in frequency at Q14 and Q16 is also amplified in the tripler stage and then sent on to the final amplifier stage 73 for amplification by amplifier Q17, then is sent to antenna 23 or 26 for broadcast. The final amplifier section 73 is tuned to 27 MHz (megahertz) and has the capability of delivering to the antenna approximately 100 mW (milliwatts) power at 50 ohms impedance.

It should be noted that the transmitter oscillator Q13 stage is powered at all times. When switching this stage on and off, it takes the combination of the resonant circuits in the receiver 60 some 20 to 40 milliseconds to stabilize. In order to transmit data during that 20 to 40 millisecond time period, the oscillator 71 power is left on at all times so that when the microprocessor 58 switches power to the tripler and amplifier stage 72, this stage is already being fed by a stabilized oscillator, thus preventing even further delays of transmit frequency stabilization. Using this mode of turning on the transmitter enables the circuit to begin transmitting modulation within 10 to 20 microseconds after powering the final amplifier stage 73.

The various component ratings used in one working embodiment of the transmitter circuit 66 are shown in the above-described FIG. 13. Specific components include the varactor diode CR2, which is a 1N5463, the crystal Y1 rated at 8.99833 MHz, the 2N3904 transmitter/ oscillator Q13; variable capacitor C8 rated at 5-60 picofarads; TX1, which is an impedance matching toroidal transformer; Q14 and Q16 transistor/amplifiers, both of which are 2N3904; 2N3866 transistor/amplifier Q17; and TX2 and TX3 which are an impedance matching toroidal transformer.

Referring next to the circuit schematic of the receiver section 60 shown in FIG. 14, the signal comes in through the antenna 23 or 26, through TX3 (FIG. 13), which is the same tuned circuit which is used for transmitting. However, during the receive mode, the rf drive to Q17 (FIG. 13) is turned off and the signal comes out of tap 3 on TX3 to the line labeled RcvAnt connected to C18 & C11, the entry point to FIG. 14, and is then fed into gate 1 of Q22, which is a dual-gate MOSFET amplifying device type 3N211, used for RF amplifiers at this frequency. The gain of the stage is set by the DC bias at gate 2 to realize approximately a 30 dB gain on this stage. The signal is then sent through the tuned circuit made up of the primary of transformer TX4 and capacitor C29 in parallel and matched into the input of A4, a multi-transistor integrated circuit amplifier and mixer combination. Q22 is the local oscillator stage which oscillates at the frequency set by crystal Y3. The output of this local oscillator is fed through capacitor C38 and resistor R48 into amplifier A4 and there mixed with the nominal 27 MHz (megahertz) signal coming in from the RF amplifier Q22, producing an output frequency of 10.7 MHz which is tuned by the resonant combination of C34, C35 and the primary of TX5. The output of TX5 is matched to 3,000 ohms which is the input impedance of the crystal filter FL1, a narrow band two-pole crystal filter which rejects frequencies other than the frequency intended to be detected. This enables the circuit to reject signals in the nearby adjacent citizens band to prevent any interference with data transmission between the hand-held terminals 21 and the radio base station 24.

The output of filter FL1 feeds into pin 16 of IC chip designated generally 75, which is an MC3357 FM VLSI integrated circuit whose primary function is to amplify signals at 10.7 MHz and beat them against a 10.245 MHz frequency producing a 455 kHz second IF. All of the components necessary for the 10.245 MHz oscillator except for the crystal Y4 and the reactive elements C22 and C23, which are connected across pins 1 and 2, are included on the chip 75. The mixer is also included on this chip and the frequency of 455 kHz is output at pin 3, run through ceramic filter FL2 which has a very narrow passband, in this case $\pm$ 7.5 kHz (kilohertz), again enhancing the capability to reject unwanted signals. The combination of filters FL1 and FL2 provides the capability to reject signals that are 10 kHz removed from the carrier frequency signal with attenuation on the order of 20 dB.

The output of the ceramic filter FL2 goes back to pin 5 of the device 75 where it is sent through a phase detector, the frequency-defining elements of which are crystal Y5 and capacitor C21. Y5 and C21 produce the slope necessary for the detection of the audio component of the now 455 kHz frequency-modulated signal. After detection by chip 75, this audio component is then amplified and sent out of pin 9. The RF component of this output of 455 kHz is filtered by the LC combination of inductor L4 and capacitor C40 and then fed through capacitor C1 and resistor R53 via pin 10 into an internal amplifier in chip 75 whose input is pin 10 and output is pin 11.

The output signal Aud Out from pin 11 is fed to amplifier A5 of the demodulator circuit 61, the circuit schematic of which is also shown in FIG. 14. The demodulator 61 is a differential peak detector which determines the average, the midpoint between positive and negative peaks and thereby determines the transition points in the MFM coding and generates the +5V logic input signals for the 6303 computers 58. That is, the amplifier A5 converts the audio signal Aud Out to the +5 volt signals which are applied over line Audi Or to the 6303 computers 58 used in the hand-held terminal and radio base station. In working embodiment designed for interface with the 6303 computer 58, the demodulator circuit 61 comprises differential amplifier A5 which is an LM393; resistors R56, R57, R58, R59 and R60 of respectively 8.2K ohm, 2.2 megohm, 27K ohm and 150K ohm; two 1N914 diodes CR8 and CR9; and capacitors C50 and C51 rated at 0.1 microfarads.

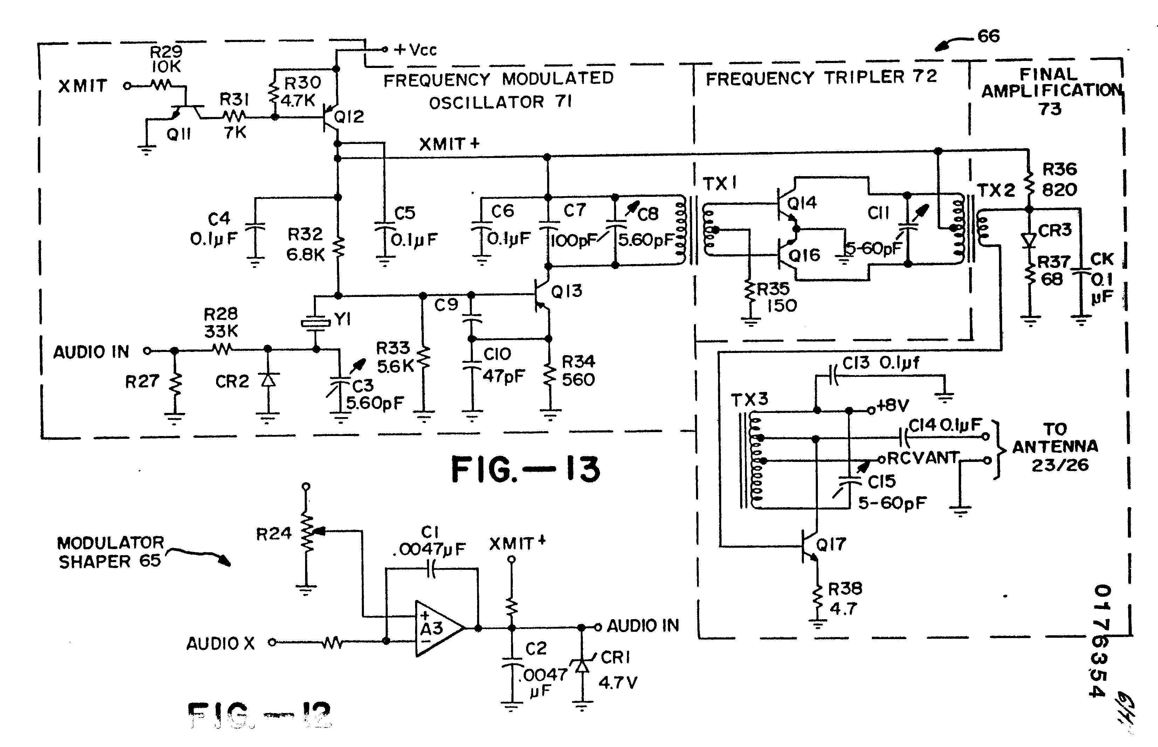

Consider now the overall communications operation of the system 20. The bi-directional flow of data within the system 20 and the associated operating programs implemented by the host computer 22 and communications computers in the system are depicted in the flow charts shown in FIGS. 15 through 18. Starting with FIG. 15, there is shown the flow chart of the machine language operating routine control program for the 6803 computer 32 used in LAN controller 31 for the central computer. The host computer 22 sequentially polls the terminals listed in its files (as indicated at 84). If data is waiting in the host computer 22 for transmission over the LAN (82), the LAN controller computer appends the data to the polling message (83) and activates line driver circuit 36 (FIG. 3) and transmits the data along with the polling message (84). Concurrently with the polling/data message, the LAN controller computer 32 initiates a timing sequence (85) so that it is not tied up indefinitely waiting for a reply. If after a predetermined time, no reply is received via receiver circuit 37, the LAN controller sends a "time-out" message to the host computer 22 (86) and the host LAN controller selects from its files the next terminal (81) to be polled.

On the other hand, if a reply is received within the timing interval (87), the LAN controller 32 stops the clock sequence (88), determines if there is any data in the reply for the host computer 22 (89) and transmits that data to the host computer (90). After the data is transmitted to the host computer, or if there is no data included in the reply to the polling message (89), the LAN controller program selects the next terminal and initiates the polling sequence (81).

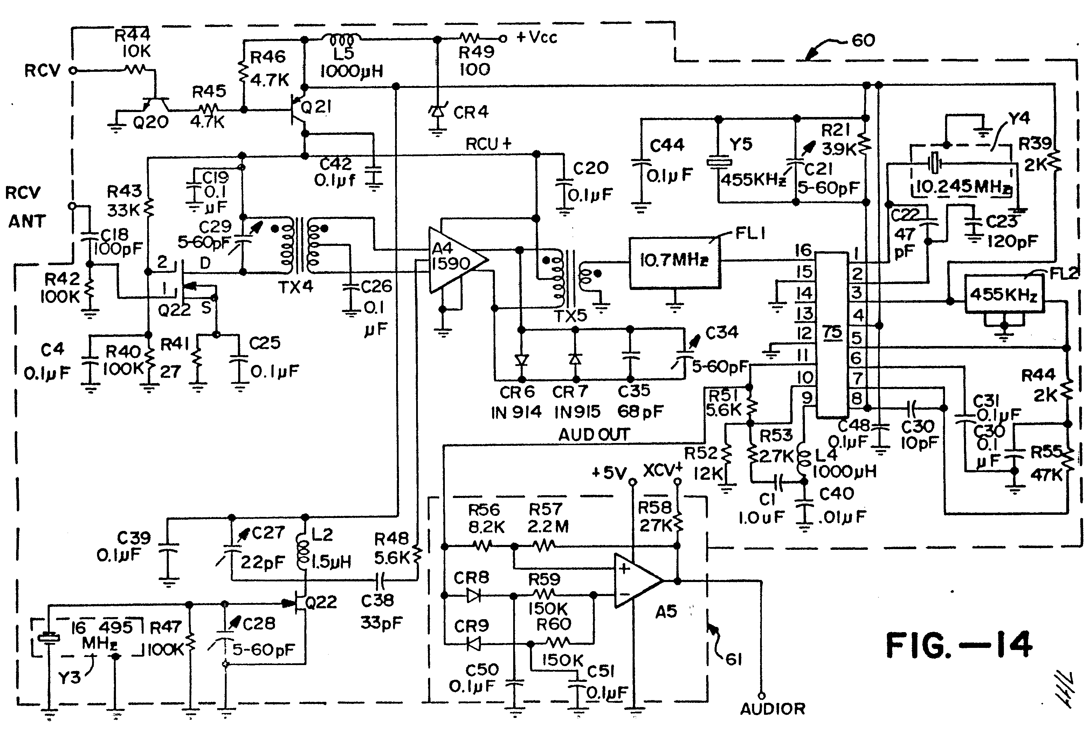

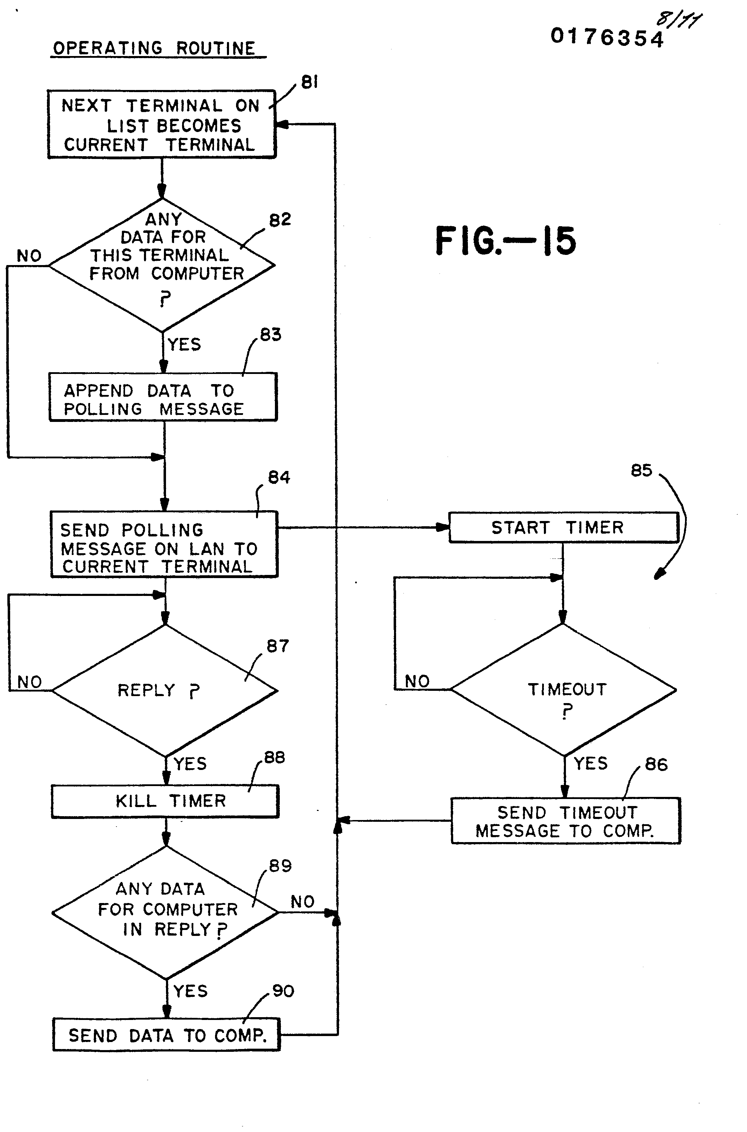

The operating routine 90 and associated interrupt routine 100 for the radio base stations 24 and RBS computer 58 (FIG. 10) are shown in FIGS. 16 and 17, respectively. Initially, maskable interrupts are enabled in the radio base station computer 58 (FIG. 10) and the radio base station receiver 60 (also FIG. 10) is turned on (91). When an information packet is received from a hand-held terminal 21, the RBS computer 58 determines if the preamble is valid (92).

If the preamble is invalid, the RBS computer determines if it has any data waiting in queue for transmission to a hand-held terminal 21. If there is such a data packet for a hand-held terminal, the RBS computer disables the interrupts, disables the receiver 60, enables the transmitter 66, transmits the data, then disables the transmitter (94) and starts the operating routine again (91). If there is no data in queue for a hand-held terminal, the RBS computer proceeds directly to start another operating routine (91).

If the incoming message packet preamble is valid (92), the radio base station computer 58 disables the interrupts to permit it to devote full time to receiving the incoming data packet (95) and then validates the terminal identification number and checksum contained in the incoming data packet (96). If either the terminal number or the checksum is incorrect, the radio base station computer 58 restarts the operating routine (91). If both are correct, the incoming data packet from the hand-held terminal is queued for transmission over the LAN 27 under control of the RBS LAN computer 42 to the host computer 22 (97).

The radio base station computer interrupt routine 100 shown in FIG. 17 is configured to provide transmission of data over the LAN 27 to the host computer 22, except when the radio base station 24 is transmitting a data packet to a hand-held terminal (94, FIG. 16) or receiving a data packet from a hand-held terminal (95, FIG. 16). The interrupt routine 101 is initiated upon receipt at RBS receiver circuit 47 (FIG. 4) of a data packet transmitted from the host computer 22 over the LAN 27 (101). The radio base station computer 58 determines if the message is for the radio base station (i.e., determines if the message is for one of the associated hand-held terminals 21) and if the checksum is valid (102). If either determination is negative, the radio base station computer 58 returns from the interrupt to the operating routine (108). If the message is validated and is for the radio base station, any data for radio transmission to a hand-held terminal is queued (104). Then, a determination is made if there exists any data in queue to be transmitted to the LAN (105) and, if there is, the data is transmitted over the LAN to the host computer 22 along with the status or "echo" response to the computer polling (106). If there is no data to be transmitted over the LAN, the status response alone is transmitted over the LAN (107). In either case, after transmission, the radio base station computer 58 returns from the interrupt routine to the operating routine (108).

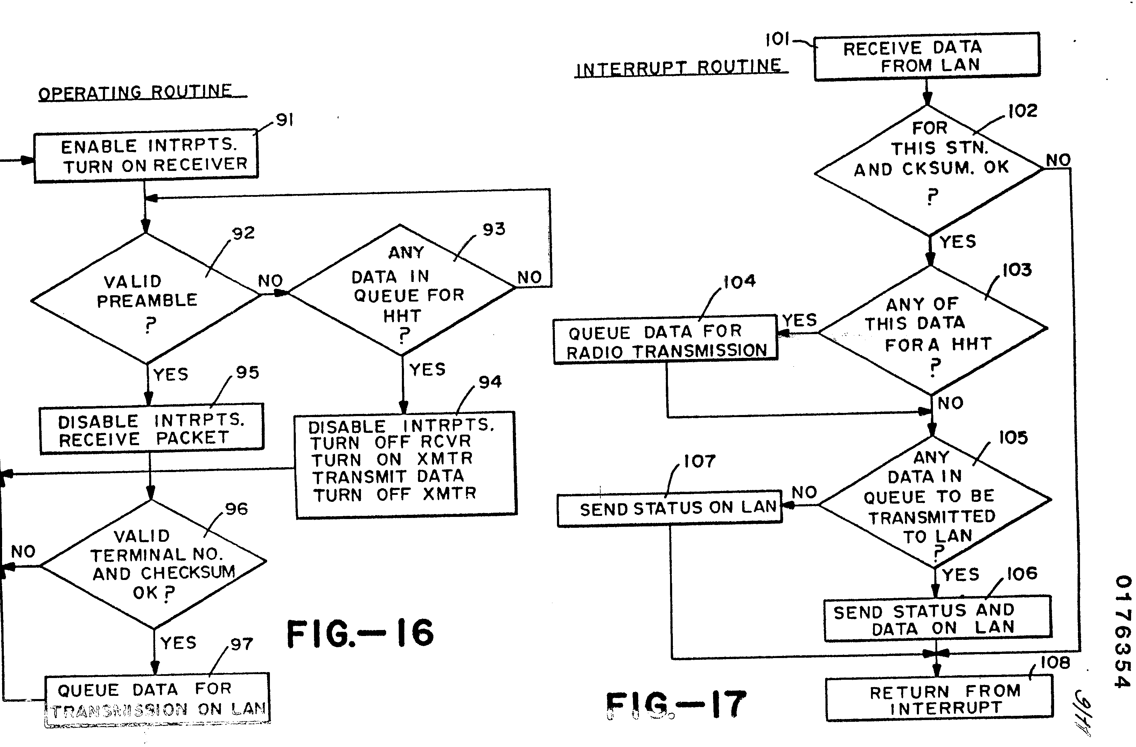

Referring to the hand-held terminal communications flow chart 110 shown in FIG. 18, normally the HHT computer 58 (FIG. 11) is occupied scanning the keyboard 63 to determine if a key is depressed (111). This keyboard scanning routine involves precharging the row lines of the keyboard matrix high, and sequentially driving the column lines low, then reading the row lines to determine if one is low, which indicates the row-column cross point key is depressed to discharge the row line to ground. This keyboard scanning technique is described in co-pending patent application U.S. Serial No. 655,010, entitled KEYBOARD SCANNING APPARATUS AND METHOD, filed the same date as the present application, in the name of CHARLES P. THACKER. This application is assigned to the assignee of the present application and is incorporated by reference.

In the event a key is determined to be depressed as discussed above (112), the hand-held terminal computer 58 prepares the associated hexadecimal data packet for transmission (113), enables the HHT transmitter 66 (FIG. 11) and transmits the data (114), then disables the transmitter and enables the HHT receiver 60 (FIG. 11) to await a reply from the radio base station (115). To prevent the HHT computer 58 from being tied up indefinitely waiting for a reply, the computer simultaneously initiates a timing sequence of a predetermined interval (116). In one illustrative version, the timing interval is repeated four times (117) and at the end of the first three times the transmitter is enabled and the data retransmitted (114). However, if a data packet is not received at the end of the fourth timing sequence (117), the HHT computer implements an appropriate notification on the hand-held terminal display 64 (118) and returns to the scan keyboard routine (111).

Returning now to activity (115), in the event a data packet is received, the HHT computer 58 determines if the preamble is valid (119). If it is, the computer accepts the data packet (120) for validation of the terminal identification number and checksum (121). If these are not correct, the data packet is not displayed and the HHT computer waits for the next data packet (119). If in fact the terminal identification and checksum are validated, the computer displays the data at display 64 (FIG. 11) and stops timing sequence (122), then returns to the scan keyboard routine (111).

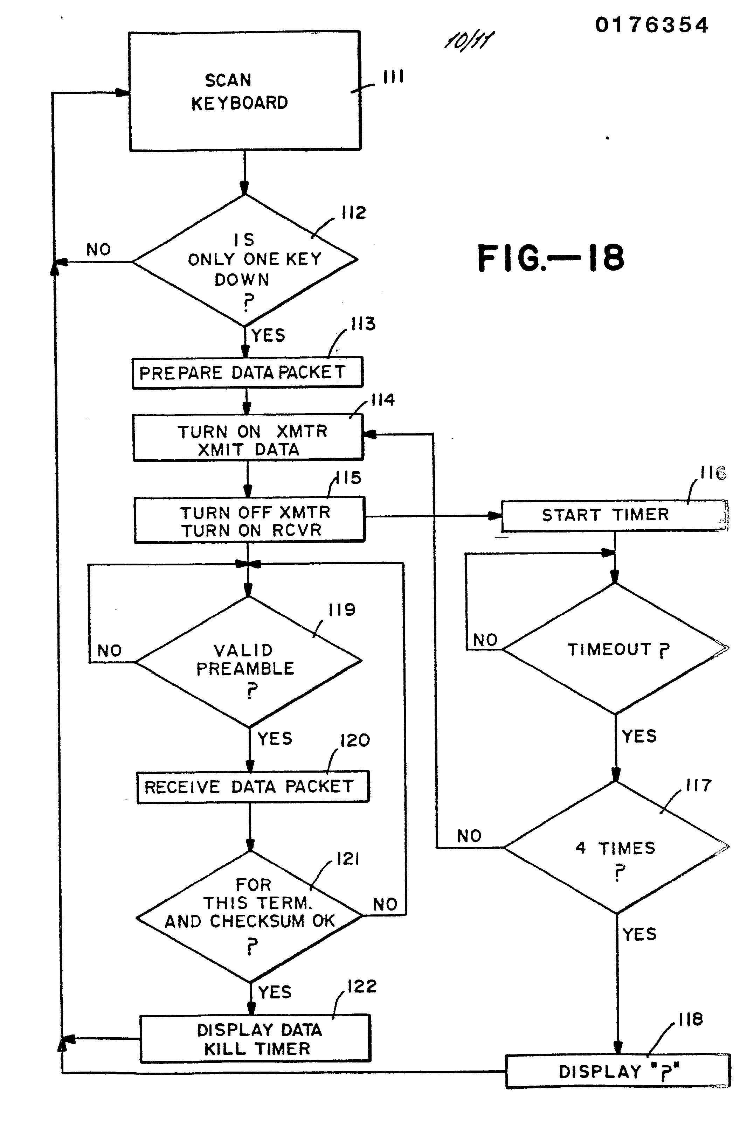

While the information entry, processing and retrieval system of the present system has been described in one preferred embodiment as the restaurant system 20, the hardware and communication software are directly convertible to other applications. One alternative system 20A is shown in FIG. 19. This system can be used as a permanently-situated inventory control system in which the hand-held terminals 21 are used to enter inventory data via one or more radio base stations 24 into the central computer 22. Printers 28 and/or terminals 29 are located at strategic points such as in the accounting department, for communication with the computer 22 and to obtain print-outs of various inventory data. The computer 22 can also be programmed for various accounting and management functions which utilize the inventory data files. In addition, the system 20A is applicable to other uses, such as data entry, processing and retrieval in health care institutions or offices or pharmacies. Furthermore, the addition of modem capability permits communication between systems or components, such as between a physician's office or pharmacy and a hospital system.

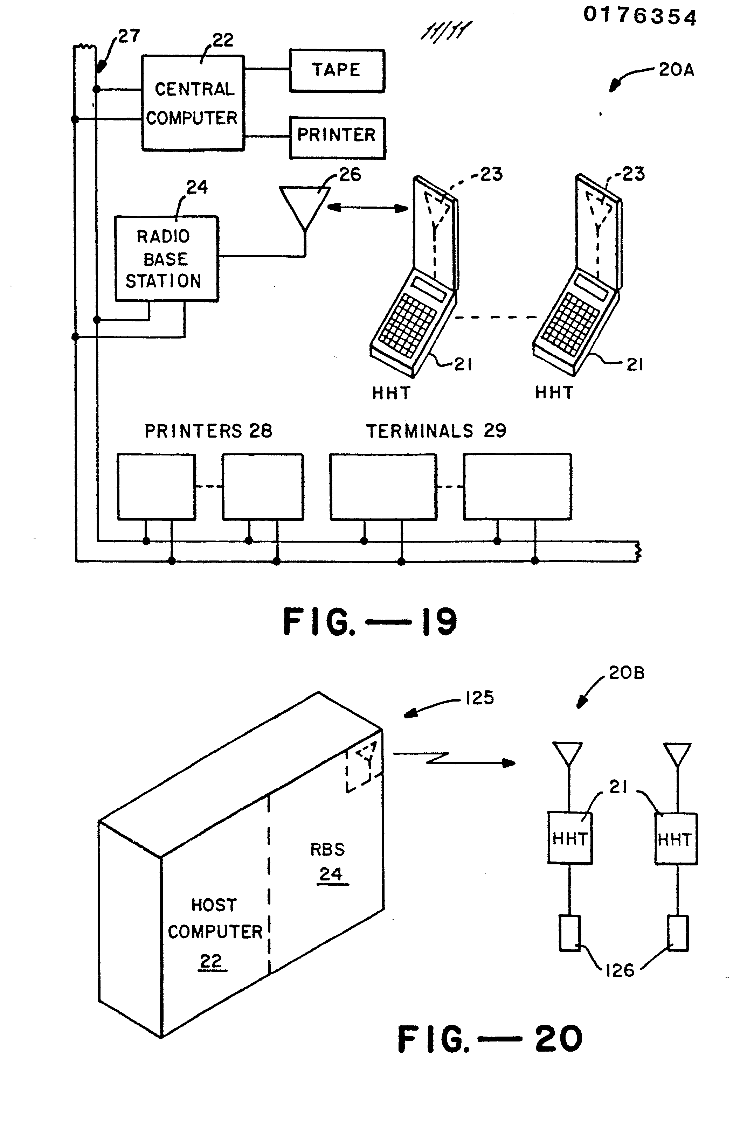

FIG. 20 illustrates another system example, in this case a mobile inventory system 20B. Here, the host computer 22 and radio base station 24 are contained in a carrying case 125 which is positioned at the inventory site for communication with the hand-held terminals 21-21.

Conveniently, the computer 22 and radio base station 24 can be battery powered. Also, the hand-held terminals 21-21 in this or other inventory-type applications can be provided with optical character recognition units 126 for facilitating the inventory process.

In view of the above discussion and description, those skilled in the art will readily appreciate that various modifications of the above system can be made within the scope of coverage of the appended claims. Having described a preferred embodiment of the above invention, what is claimed is:

CLAIMS

1. An automated information entry, processing and retrieval system which comprises:

control means which is adapted for receiving order item data from a communications link and is further adapted for verifying from memory the availability of the order item and calculating billing information and providing such verification and calculations as output to the communications link;

a portable communications terminal for transmitting order data by radio transmission and for receiving verification by radio transmission;

a radio base station adapted for communicating (a) data received in digital form from the control means to the portable terminal and (b) transmissions received from the portable terminal in digital form to the control means via the LAN; and

at least a terminal communicating with the control means over the communications link for providing order item data to the control means.

0176354

- 46 -

2.    The system of Claim 1, further comprising at least one printer communicating with the control means over the communications link and controlled by the control means for printing order item data and modifications and calculations applied thereto by the control means.

3.    The system of Claim 1, or Claim 2, wherein the control means is a general purpose computer programmed for such verification, calculation and feed-back functions.

4.    The system of any of Claims 1 to 3 wherein the communications link comprises a local area network which includes a pair of wires and driver and receiver circuits adapted for applying to the wire pair and receiving from the wire pair equal and oppositely directed currents such that digital 0/1 is determined by the current direction in a selected wire.

5.    The system of any of Claims 1 to 3 wherein the communications link comprises a local area network including a cable interconnecting the control means and radio base station, the cable also being adapted for interconnecting other peripheral units to the control means.

6.      The system of Claim 5 wherein the local area network cable comprises a two-wire pair, and wherein stations on the local area network comprise a driver circuit adapted for receiving digital logic signals from the associated station and responsively driving the local area network wire pair to respectively relatively high and low polarity states or conversely, and for otheriwise presenting a high impedance level to the local area network during quiescent periods; and a receiver circuit adapted for transmitting digital logic signals to the associated station responsive to the combined polarity states of the local area network wire pair.

7.      The system of any of claims 4 to 6, further comprising at least one printer communicating with the control means over the local area network for printing order item data and modifications and calculations applied thereto by the control means.

8.  An automated ordering and billing system, which comprises:

computer means adapted for receiving order item data from a local area network and programmed for verifying from memory the availability of the order item and calculating billing information and providing such verification and calculations as output to the local area network;

a portable terminal for transmitting order data by radio transmission and for receiving verification by radio transmission;

a radio base station adapted for communicating data received in digital form from the computer means to the portable terminal and for communicating transmissions received from the portable terminal in digital form to the control means over the local area network;

the local area network being adapted for interconnecting the computer means and radio base station and being adapted for interconnecting peripheral units to the computer means;

at least a terminal communicating with the computer means over the local area network for providing order item data to the computer means; and

at least one printer communicating with the computer means over the local area network and controlled by the computer means for printing order item data and modifications and calculations applied thereto by the computer means.

9.    The system of Claim 8 wherein the local area network cable comprises a two-wire pair, and wherein stations on the local area network comprise a driver circuit circuit adapted for receiving digital logic signals from the associated station and responsively driving the local area network wire pair to respectively relatively high and low polarity states or conversely, and for otherwise presenting a high impedance level to the local area network during quiescent periods; and a receiver circuit adapted for transmitting digital logic signals to the associated station responsive to the combined polarity states of the local area network wire pair.

10.   The ordering and billing system of Claim 8 or Claim 9, wherein the portable terminal and the radio base station include transceiver means and computer means adapted for controlling bi-directional communication between the transceiver means and the local area network.

11.   The ordering and billing system of Claim 8, wherein the local area network comprises a pair of wires, and wherein the computer means and the radio base station, and the terminal and printer units further comprise driver and receiver circuits adapted for applying to the wire pair and receiving from the wire pair equal and oppositely-directed currents such that digital 0/1 is determined by the current direction in a selected wire.

12.   The order and billing system of Claim 10, wherein the local area network comprises a pair of wires, wherein the system components including the computer means, the radio base station and the terminal and printer units further comprise a driver and receiver circuit adapted for applying to the wire pair and receiving from the wire pair equal and oppositely-directed currents such that digital 0/1 is determined by the current direction in a selected wire, and wherein each said circuit is controlled by a computer to effect bi-directional communication through the circuit between the particular associated component and the local area network.

0176354

1/11

20

HHT    HHT

PRINTERS 28

| FLOOR | FLOOR | KITCHEN | KITCHEN | BAR | BAR |

TERMINALS 29

| CASH REGISTER | CASH REGISTER | KITCHEN | KITCHEN | BAR | BAR |

FIG.—1

TO COMPUTER 22    TO PERIPHERALS 24, 28, 29

FIG.—2

0176354

FIG. —3

FIG. —4

FIG. — 5

FIG. — 6

FIG.—7

FIG.—9

FIG.—8

# FIG.—10

**RADIO BASE STATION**

FROM LAN BOARD 41 → PARALLEL I/O PORT 56 → MICRO COMPUTER 58

RADIO SECTION 59

MODULATOR CIRCUIT 65 (FIG.12) → 100 mW 27 MHz TRANSMITTER 66 (FIG—13) → antenna 26

TO LAN BOARD 41 ← PARALLEL I/O PORT 56 ← MICRO COMPUTER 58 ← DEMODULATOR CIRCUIT 61 (FIG.14) ← 27 MHz RECEIVER 60

RADIO BASE STATION 24

# FIG.—11

KEYBOARD 63 → MICROCOMPUTER 58

RADIO SECTION 59

MODULATOR CIRCUIT 65 (FIG.12) → 100 mW 27 MHz TRANSMITTER 66 (FIG.13) → antenna 23

DISPLAY 64 ← MICROCOMPUTER 58 ← DEMODULATOR CIRCUIT 61 (FIG.14) ← 27 MHz RECEIVER 60 (FIG.14)

HAND HELD TERMINAL 21

**HAND HELD TERMINAL**

5/11

0176354

FIG.—13

FIG.—12

MODULATOR SHAPER 65

FIG.—14

0176354

OPERATING ROUTINE

FIG.—15

NEXT TERMINAL ON LIST BECOMES CURRENT TERMINAL — 81

ANY DATA FOR THIS TERMINAL FROM COMPUTER ? — 82

NO

YES

APPEND DATA TO POLLING MESSAGE — 83

SEND POLLING MESSAGE ON LAN TO CURRENT TERMINAL — 84

START TIMER — 85

REPLY ? — 87

NO

TIMEOUT ? 

NO

YES

KILL TIMER — 88

YES

SEND TIMEOUT MESSAGE TO COMP. — 86

ANY DATA FOR COMPUTER IN REPLY ? — 89

NO

YES

SEND DATA TO COMP. — 90

## OPERATING ROUTINE

FIG.—16

## INTERRUPT ROUTINE

FIG.—17

0176354

FIG.—18

0176354

10/11

11/11                    0176354

**FIG.—19**

**FIG.—20**